# EUROPEAN PATENT APPLICATION

(11) **EP 1 615 217 A1**
(43) Date of publication of application: **11.01.2006**
(21) Application number: 04723712.8
(22) Date of filing: 26.03.2004
(51) Int. Cl.: G11B 20/10, G11B 20/12, G09C 1/00

(54) **DIGITAL DATA STORAGE/REPRODUCTION METHOD AND DEVICE**

(30) Priority: 11.04.2003 JP 2003107278
(71) Applicant: SONY CORPORATION, Tokyo 141-0001 (JP)
(72) Inventor: KOIKE, Takashi Sony Corporation, Tokyo 1410001 (JP); IWATSU, Takeshi Sony Corporation, Tokyo 1410001 (JP); KIMURA, Manabu Sony Corporation, Tokyo 1410001 (JP)
(74) Representative: Nicholls, Michael John
(86) International application number: PCT/JP2004/004288
(87) International publication number: WO 2004/093073

(57) **Abstract**

A digital data storing method is provided in which digital data whose content varies as the time elapses is partially encrypted for each predetermined period τ at a predetermined time interval T. The encryption is done for the ratio of the period τ of the encrypted part to the predetermined time interval T and period τ of the encrypted part to be sufficiently small. The digital data thus encrypted is stored.

## Description

### Technical Field

The present invention relates to a method of, and device for, storing digital data such as audio data or the like, and also to a method of, and device for, reproducing the digital data.

This application claims the priority of the Japanese Patent Application No. 2003-107278 filed on April 11, 2003, the entirety of which is incorporated by reference herein.

### Background Art

As the digital processing and network technology have moved forward, there have been proposed techniques for distributing digital audio data to the users via broadcasting and network. An audio device for use with such techniques is known from the disclosure in the Japanese Patent Application Laid Open No. 2003-30018. In the audio server disclosed in this Patent document, distributed audio data is stored once in a hard disk drive (HDD) built therein, and retrieved when necessary. Also, another audio server is proposed in the Japanese Patent Application Laid Open No. 2001-243705. The device disclosed in this Patent document is adapted to encrypt digital audio data for storage, and decrypt the encrypted digital audio data and output the data only when it is authenticated.

Note here that since the audio server can only operate according to software installed therein, it is not possible to copy digital audio data stored in the built-in HDD to a CD-R (CD Recordable) or the like. However, by physically taking out the built-in HDD from the audio server and connecting it to a personal computer, it is possible to copy digital audio data stored in the HDD to another HDD, CD-R or the like. In this case, the right of the copyright holder cannot be protected.

On this account, it is proposed to encrypt distributed digital audio data before storage into the built-in HDD in the audio server. Thereby, it is possible to reproduce a music or the like for normal listening by decrypting the encrypted digital audio data in an authenticated audio server.

However, even if the built-in HDD taken out of the audio server is connected to a personal computer, it will not be possible to decrypt the encrypted digital audio data. As a result, the copyright on the digital audio data can be protected.

However, since the CPU (central processing unit) used in most of the home-use audio servers is low in processing power, it cannot continuously decrypt digital audio data for reproduction. Of course, a high-power CPU or a decrypt-only IC (integrated circuit), if any, used in the home-use server can continuously decrypt encrypted digital audio data for reproduction. In this case, however, such an audio server will be expensive.

### Disclosure of the Invention

Accordingly, the present invention has an object to overcome the above-mentioned drawbacks of the related art by providing an improved and novel digital data storing method and device, data reproducing method and device, and a recording medium for recording digital data.

The above object can be attained by providing a digital data storing method including, according to the present invention, the steps of:
encrypting part of digital data; and
storing the encrypted digital data and non-encrypted remainder of the digital data.

The above digital data storing method according to the present invention further includes the step of dividing the digital data into blocks each of a predetermined data size, part of each of the digital data blocks being encrypted to encrypted digital data.

Also the above object can be attained by providing a data storing device including according to the present invention:
an encrypting means for encrypting part of digital data; and
a storing means for storing the digital data encrypted by the encrypting means and non-encrypted remainder of the digital data.

The above data storing means according to the present invention further includes a dividing means for dividing the digital data into blocks each of a predetermined size, the encrypting means encrypting part of each the digital data blocks supplied from the dividing means to provide encrypted digital data.

Also the above object can be attained by providing a digital-data recording medium having recorded therein encrypted digital data resulted from encryption of part of digital data, and non-encrypted remainder of the digital data.

In the above recording medium, there is recorded the encrypted digital data resulted from encryption of part of each of digital data blocks each of a predetermined data size.

Also the above object can be attained by providing a data reproducing method including, according to the present invention, the steps of :
acquiring digital data including encrypted digital data and non-encrypted digital data;
extracting the encrypted digital data from the digital data and decrypting the encrypted digital data; and
outputting, as read data, the decrypted digital data and the non-encrypted digital data extracted from the digital data.

Also the above object can be attained by providing a data reproducing device including according to the present invention:
an input means for inputting digital data including encrypted digital data and non-encrypted digital data;
a decrypting means for extracting the encrypted digital data from the digital data acquired by the input means and decrypting the extracted encrypted digital data; and
a reproducing means for extracting the digital data decrypted by the decrypting means and non-encrypted digital data extracted from the digital data and outputting the digital data together as read data.

In the above data reproducing device, the digital data includes the encrypted digital data and non-encrypted digital data in each of digital data blocks each of a predetermined data size, and the decrypting means extracts the encrypted digital data from each block of the predetermined data size and decrypts the encrypted digital data.

Also, the input means acquires information indicative of the encrypted digital data along with the digital data, and the decrypting means extracts the encrypted digital data on the basis of the acquired positional information and decrypts the encrypted digital data.

The above data reproducing device according to the present invention further includes a second decrypting means for decrypting encrypted information indicative of the position of the encrypted digital data, the input means acquires the encrypted positional information along with the digital data, and the decrypting means extracts the encrypted digital data on the basis of the information indicative of the position of the encrypted digital data decrypted by the second decrypting means and decrypts the encrypted digital data.

These objects and other objects, features and advantages of the present invention will become more apparent from the following detailed description of the best mode for carrying out the present invention when taken in conjunction with the accompanying drawings.

### Brief Description of the Drawings

FIG. 1 is a block diagram of an audio server according to the present invention.
FIG 2A schematically illustrates digital audio data to be encrypted, FIG. 2B schematically illustrates the digital audio data supplied from an encryption circuit, and FIG. 2C schematically illustrates disk audio data whose encrypted part has become a noise sound.
FIG. 3 is a block diagram of a CD player according to the present invention.
FIG 4 schematically illustrates digital audio data encrypted for each arbitrary period τi at each arbitrary time interval Ti (i = 1 to n).
FIG. 5 shows a table showing the arbitrary time intervals Ti (i = 1 to n) and τi used to encrypt digital audio data for each arbitrary period τi at each arbitrary time interval Ti (i = 1 to n).

### Best Mode for Carrying Out the Invention

The present invention will be described in detail below concerning the embodiments thereof with reference to the accompanying drawings.

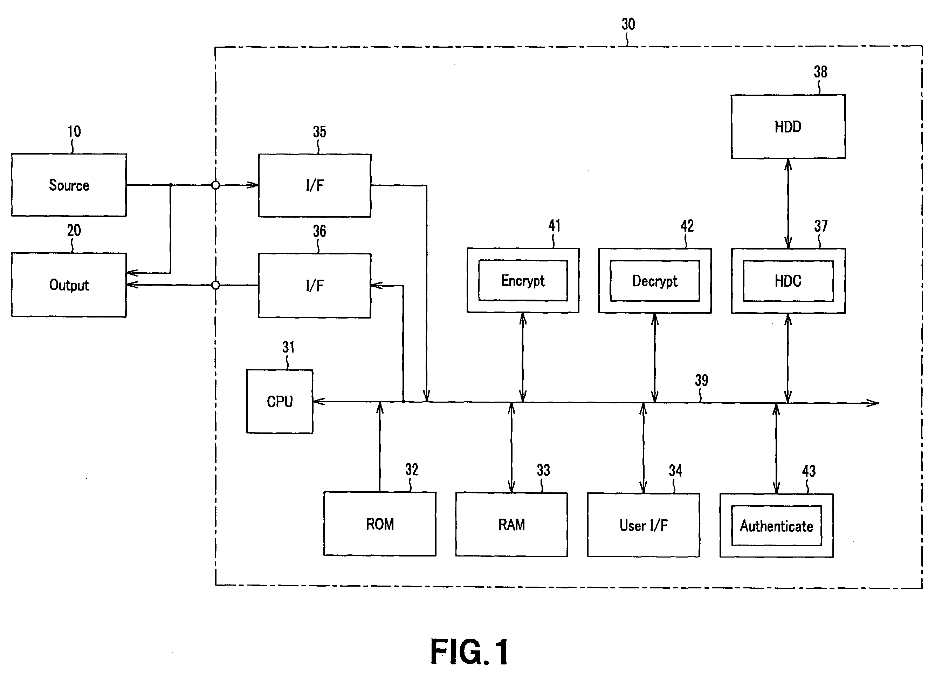

First, an audio server according to the present invention will be illustrated and described. The audio server, generally indicated with a reference numeral 30, has connected thereto a source 10 of various audio signals and an audio output device 20 as shown in FIG 1.

The source 10 used with the audio server 30 according to the present invention is a signal source such as a network, CD, digital broadcast tuner or the like to provide an audio signal in the form of digital data, that is, in the form of digital audio data. The output device 20 includes a D-A (digital-to-analog) converter, speaker, etc. (not shown). When supplied with digital audio data from the source 10 or audio server 30, the output device 20 outputs the digital audio data as sound.

Further, according to an instruction given by the user, the audio server 30 stores the digital audio data supplied from the source 10 or reproduces the stored digital audio data and outputs the data to the output device 20. On this account, the audio server 30 includes a microcomputer.

That is, the audio server 30 includes a CPU (central processing unit) 31 that executes various programs, ROM (read-only memory) 32, work-area RAM (random-access memory) 33 and a user interface 34. These server elements are connected to each other via a system bus 39. In this embodiment, the ROM 32 has written therein various programs to be executed by the CPU 31. The user interface 34 is provided with various operation keys (controls) that are to be used by the user, and a display that displays the state or the like of the audio server 30.

Further, the source 10 is connected to the system bus 39 via an input interface 35, and the system bus 39 is connected to the output device 20 via an output interface 36. Also, a hard disk drive (HDD) 38, for example, is provided as a large-capacity storage means in the audio server 30, and it is connected to the system bus 39 via an HDC (hard disk controller) 37. It should be noted that the HDD 38 may be an HDD used in a general personal computer or the like.

Also, the system bus 39 has connected thereto an encryption circuit 41, decryption circuit 42, and an authentication circuit 43. In this embodiment, however, the encryption circuit 41, decryption circuit 42 and authentication circuit 43 are implemented by software. That is to say, the CPU 31 executes programs in the ROM 32 to implement the encryption, decryption and authentication, respectively. Therefore, since encryption of data in the encryption circuit 41 for storage of the data and decryption of the encrypted data in the decryption circuit 42 for extraction of the data are implemented in parallel with the data storage and data extraction, they will be a load to the CPU 31. It should be noted that the encryption circuit 41 makes data encryption by a method in which encrypted text data like a random noise is generated with little correlation with initial digital data, for example, DES (data encryption standard) method.

Further, the authentication circuit 43 is provided to permit outputting of digital audio data to the output device 20 only when the latter has been identified, by checking, to be a preset legal one.

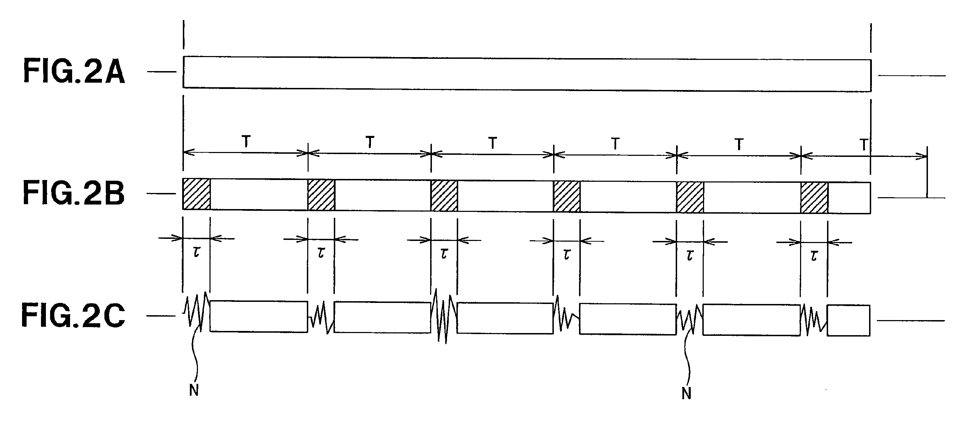

In this system, when the audio server 30 is to store digital audio data supplied from the source 10, the digital audio data is supplied via the input interface 35 to the encryption circuit 41 where it will be encrypted as shown in FIGS. 2A to 2C.

FIG. 2A shows digital audio data for supply to the encryption circuit 41, and FIG. 2B shows the digital audio data outputted from the encryption circuit 41. As shown, only hatched part of the digital audio data from the encryption circuit 41 has been encrypted in this case. That is, the encryption circuit 41 encrypts only the part (hatched) for a predetermined period τ at each predetermined time interval T. In this embodiment, the values T and τ are prepared as part of the encryption circuit 41 in the programs in the ROM 32. For example, T = 23 msec and τ = 1 msec.

The partially encrypted digital audio data is written to the HDD 38 via the HDC 37.

On the other hand, for using digital audio data stored in the audio server 30, first the authentication circuit 43 authenticates the output device 20. When the output device 20 has been identified, as the result of the authentication of the output device 20, to be a legal output device, desired digital audio data is read from the HDD 38 via the HDC 37 and supplied to the decryption circuit 42 where encrypted part of the digital audio data for the period τ at each time interval T is decrypted to extract initial digital audio data, and the extracted digital audio data is supplied via the output interface 36 to the output device 20 that will reproduce the data as sound.

Note that if the output device 20 is identified, as the result of authentication of the output device 20, not to be any legal output device, no digital audio data will be read from the HDD 38. Hence, it is not permitted to output any digital audio data to the output device 20.

Thus, the aforementioned audio server 30 can store digital audio data and retrieve the data when necessary. In this embodiment, by physically taking out the HDD 38 from the audio server 30 and connecting it to a personal computer, it is possible to copy the digital audio data stored in the HDD 38 to another HDD, CD-R or the like and reproduce the data.

However, since the digital audio data copied to the other HDD or CD-R (CD recordable) has a part thereof encrypted for the period τ at each time interval T as shown in FIG 2B and the encrypted digital audio data is reproduced as sound without being decrypted in the personal computer, the encrypted part will be outputted as noise sound N as shown in FIG. 2C.

That is to say, even if the digital audio data in the HDD 38 is copied to another HDD or CD-R, the reproduced sound thus contains noise sound at the regular intervals, which will cause any try of reproducing any music to result in substantial failure. Therefore, it is possible to protect the right of the copyright holder on the music.

In addition, since the CPU 31 executes the programs for encryption in the encryption circuit 41 and decryption in the decryption circuit 42 for the period τ at each time interval T, that is, for only τ/T of the whole period, presetting a smaller ratio τ/T and value τ will lead to a reduced load to the CPU 31 that executes the encryption and decryption. Thus, the CPU 31 may not be any high-power one. Namely, even a CPU 31 having a small processing power can execute the encryption and decryption. Thus, any IC (integrated circuit) dedicated for encryption and decryption has not to be provided in the audio server 30. Therefore, the audio server 30 can be produced at a lower cost.

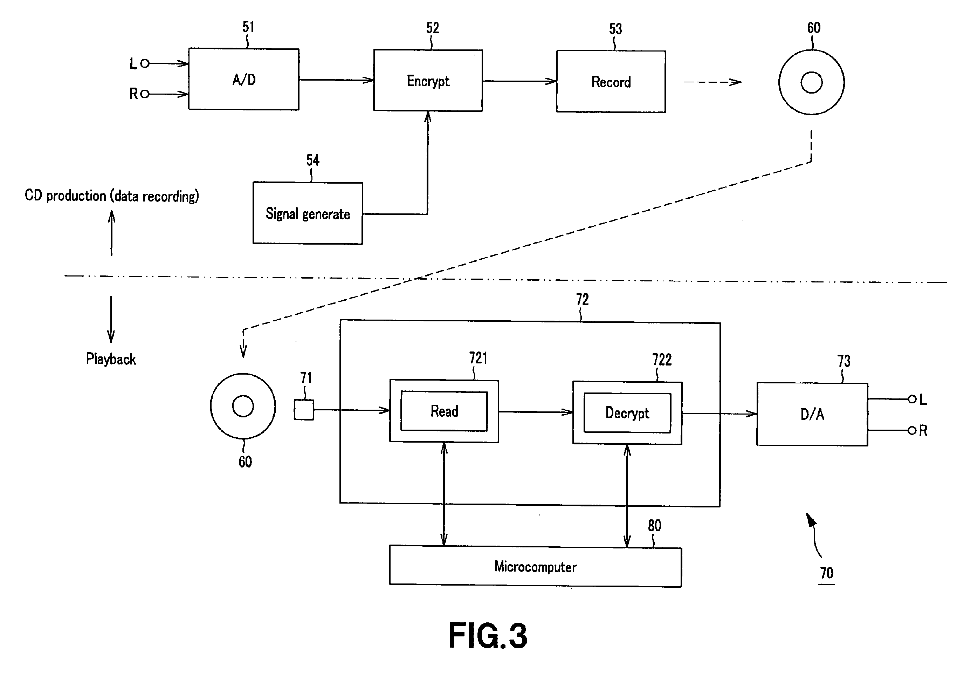

FIG. 3 shows an application of the present invention to a CD (compact disk) and CD player. First, for producing a CD (recording data to a CD), analog audio signals L and R are supplied to an analog-to-digital (A-D) converter 51 where they will be converted into digital audio data, and the digital audio data is supplied to an encryption circuit 52. Also, a signal indicative of the period τ at each time interval T is supplied from a signal generation circuit 54 to the encryption circuit 52. Thus, in the encryption circuit 52, the supplied digital audio data is encrypted for a period τ at each time interval T as shown being hatched in FIG 2B.

The encrypted part of the digital audio data is supplied to a recording circuit 53 where it will be encoded for error correction, EFM (eight to fourteen modulation), etc., and the EFM signal is recorded to a master disk for a CD. It should be noted that at this time, data indicative of the values T and τ is supplied from the signal generation circuit 54, encrypted into encrypted text data by the encryption circuit 52, and then supplied to the recording circuit 53 where the encrypted text data indicative of the values T and τ will be recorded as sub codes to the CD master disk. Thus, a CD 60 having recorded therein digital audio data partially encrypted as shown in FIG 2B is formed based on the master disk.

The CD 60 is played in a CD player 70. More particularly, an optical pickup 71 reads an EFM signal from the CD 60, and the read EFM signal is supplied to a reproduction circuit 721 of a DSP (digital signal processor) 72. The DSP 72 executes programs that perform the functions of the reproduction circuit 721 and a decryption circuit 722 provided at the next stage. Also, the DISP 72 has connected thereto a microcomputer 80 that controls the system operation of the CD player 70.

The reproduction circuit 721 operates in a complementary manner with the recording circuit 53, namely, it makes demodulation and error correction of the EFM signal. The reproduction circuit 721 extracts the encrypted part of the digital audio data and encrypted sub codes, and supplies the digital audio data to the decryption circuit 722. Also, the sub codes extracted by the reproduction circuit 721 are supplied to the microcomputer 80. When the CD 60 has been pre-authenticated, the data on the initial values T and τ are decrypted, extracted and supplied to the decryption circuit 722.

Then, using the values T and τ, the decryption circuit 722 decrypts the encrypted part of the digital audio data into the initial digital audio data. The digital audio data thus decrypted is supplied to a D-A (digital-to-analog) converter 73 where it will be subhected to D-A conversion into the initial analog audio signal L and R.

Thus, the aforementioned CD 60 can normally be played in the CD player 70 which has been authenticated. However, if the CD 60 is played in any CD player not authenticated, the encrypted part of the digital audio data read from the CD 60 will be reproduced as sound without being decrypted, and so the encrypted part will be outputted as noise sound. Therefore, if the CD 60 is played in any CD player not authenticated, the CD playing will result in substantial failure and thus it is possible to protect the right of the holder of the copyright on the data.

Since the DSP 72 implements the decryption in the decryption circuit 722 for only τ/T of the whole period, presetting smaller ratio τ/T and value τ will reduce the load to the DSP 72 in performing the decryption. Thus, the DSP 72 may not be any high-power one. Even a DSP 72 having a small processing power can execute the encryption and decryption. Thus, any IC (integrated circuit) dedicated for encryption and decryption may not be provided in the CD player 70. Therefore, the CD player 70 can be produced at a lower cost.

Further, a legal user of the CD 60 can back up the CD 60 because the CD 60 can be played by copying it to a CD-R or the like.

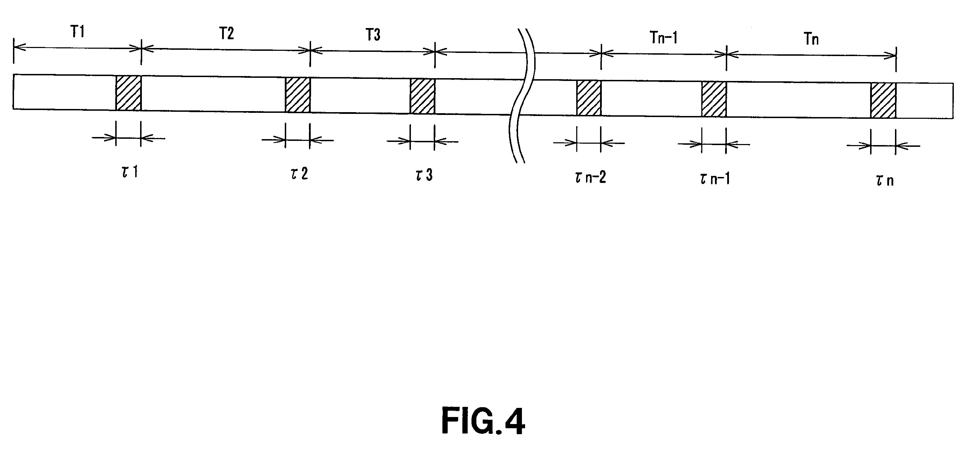

Note that the audio server 30 or CD player 70 may be authenticated by any arbitrary method, or permission for decryption of an encrypted part may be obtained by any arbitrary method. Although it has been described in the foregoing that digital audio data has a part thereof encrypted for each period τ at each time interval T, the digital audio data may be partially encrypted (as shown being hatched) for each arbitrary period τi at each arbitrary time interval Ti (i = 1 to n) as shown in FIG. 4. Especially, digital audio data that is a music can effectively be encrypted by phrasing a time interval Ti into several tens bar lines and assigning a period τi to a deep or low sound point.

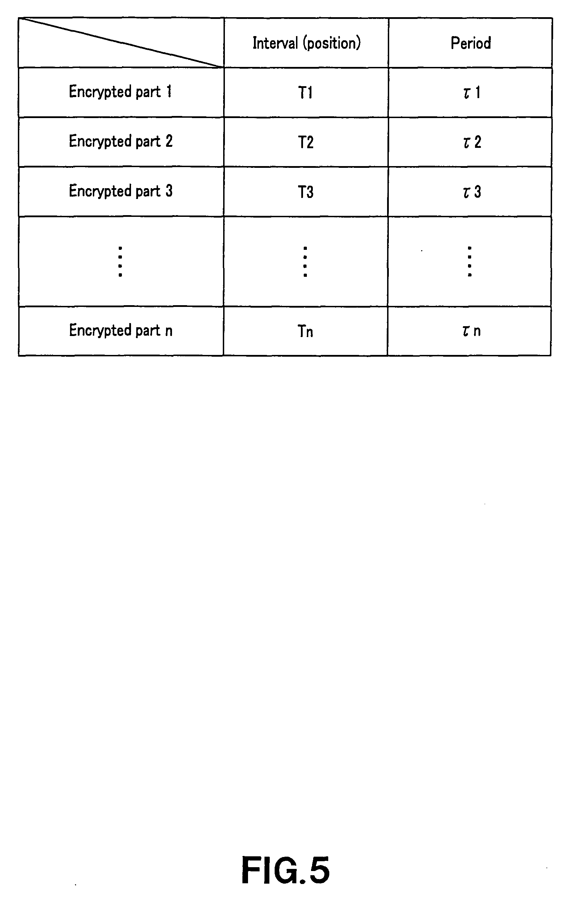

In the above case, the values Ti and τi can be prepared in the form of a table as shown in FIG 5 for example, and stored in the ROM 32 in the audio server 30 shown in FIG. 1. Alternatively, the table can be recorded along the sub track for the CD player 70 shown in FIG. 3.

Also, although it has been described in the foregoing that the values T and τ (or Ti and τi) are stored in the ROM 32 in the audio server 30 shown in FIG. 1, the values T and τ may be supplied from the source 10 as in the CD 60 shown in FIG. 3. In this case, the values T and τ may be encrypted, and the encrypted values T and τ be decrypted for use to decrypt an encrypted part of digital audio data when the audio server 30 is authenticated.

Also, although the present invention has been described above concerning the digital audio data, the audio server 30 is also compatible with digital data such as digital video signals and moving pictures so long as the data continuously vary as the time elapses. Also, a nonvolatile memory may be used in place of the HDD 38.

In the foregoing, the present invention has been described in detail concerning certain preferred embodiments thereof as examples with reference to the accompanying drawings. However, it should be understood by those ordinarily skilled in the art that the present invention is not limited to the embodiments but can be modified in various manners, constructed alternatively or embodied in various other forms without departing from the scope and spirit thereof as set forth and defined in the appended claims.

### Industrial Applicability

As having been described in the foregoing, since according to the present invention, digital data is partially encrypted and the encrypted part of the digital data is read as a noise even when an HDD having the digital data stored therein is used in another personal computer, the digital data cannot normally be reproduced in practice and thus it is possible to protect the right of the copyright holder on the digital data.

By presetting a smaller part of the digital data for encryption, a CPU not high in processing power can be used to reproduce the digital data, any IC dedicated for data decryption is not required, and thus the device can be produced with a reduced cost.

## Claims

1. A digital data storing method comprising the steps of:
encrypting part of digital data; and
storing the encrypted part of the digital data and non-encrypted remainder of the digital data.

2. The method according to claim 1, wherein the data part to be encrypted is sufficiently smaller in size than the digital data.

3. The method according to claim 1, further comprising the step of dividing the digital data into blocks each of a predetermined data size,
part of each of the digital data blocks being encrypted to provide encrypted digital data.

4. The method according to claim 1, wherein information indicative of the position of the encrypted digital data is stored along with the encrypted digital data and non-encrypted digital data.

5. The method according to claim 4, wherein:
the information indicative of the position of the digital data is encrypted; and
the encrypted positional information is stored along with the encrypted digital data and non-encrypted digital data.

6. A data storing device comprising:
an encrypting means for encrypting part of digital data; and
a storing means for storing the digital data encrypted by the encrypting means and non-encrypted remainder of the digital data.

7. The device according to claim 6, wherein the data part to be encrypted by the encrypting means is sufficiently smaller in size than the digital data.

8. The device according to claim 6, further comprising a dividing means for dividing the digital data into blocks each of a predetermined data size,
part of each of the digital data blocks being encrypted to provide encrypted digital data.

9. The device according to claim 6, wherein the storing means stores information indicative of the position of the encrypted digital data along with the encrypted digital data and non-encrypted digital data.

10. Device according to claim 9, further comprising a second encrypting means for encrypting the information indicative of the position of the encrypted digital data to provide encrypted positional information,
the encrypted positional information provided by the second encrypting means being stored along with the encrypted digital and non-encrypted digital data.

11. A digital-data recording medium having recorded therein encrypted digital data resulted from encryption of part of digital data and non-encrypted remainder of the digital data.

12. The medium according to claim 11, wherein the encrypted part of the digital data is sufficiently smaller in size than the digital data.

13. The medium according to claim 11, wherein:
the digital data is divided into blocks each of a predetermined data size; and
digital data resulted from encryption of part of each of the digital data blocks is recorded.

14. The medium according to claim 11, wherein information indicative of the position of the encrypted digital data is recorded along with the encrypted digital data and non-encrypted digital data.

15. The medium according to claim 14, wherein:
the information indicative of the position of the encrypted digital data is encrypted; and
the encrypted positional information is stored along with the encrypted digital data and non-encrypted digital data.

16. A data reproducing method comprising the steps of:
acquiring digital data including encrypted digital data and non-encrypted digital data;
extracting the encrypted digital data from the digital data and decrypting the encrypted digital data; and
outputting, as read data, the decrypted digital data and the non-encrypted digital data extracted from the digital data.

17. The method according to claim 16, wherein:
the digital data includes the encrypted digital data and non-encrypted digital data in each of the blocks having the predetermined data size; and
the encrypted digital data is extracted from each of the blocks having the predetermined data size and the extracted encrypted digital data is decrypted.

18. The method according to claim 16, wherein:
information indicative of the encrypted digital data is acquired along with the digital data; and
the encrypted digital data is extracted based on the acquired positional information and decrypted.

19. The method according to claim 18, wherein:
the information indicative of the position of the encrypted digital data is encrypted;
the encrypted positional information is acquired along with the digital data;
the encrypted positional information is decrypted; and
the encrypted digital data is extracted based on the decrypted information indicative of the position of the encrypted digital data and decrypted.

20. A data reproducing device comprising:
an input means for inputting digital data including encrypted digital data and non-encrypted digital data;
a decrypting means for extracting the encrypted digital data from the digital data supplied from the input means and decrypting the extracted encrypted digital data; and
a reproducing means for outputting, as read data, the digital data decrypted by the decrypting means and non-encrypted digital data extracted from the digital data.

21. The device according to claim 20, wherein:
the digital data includes the encrypted digital data and non-encrypted digital data in each of the blocks having the predetermined data size; and
the decrypting means extracts the encrypted digital data from each of the blocks having the predetermined data size and decrypts the extracted encrypted digital data.

22. The device according to claim 20, wherein:
the input means acquires the information indicative of the position of the encrypted digital data along with the digital data; and
the decrypting means extracts the encrypted digital data based on the extracted positional information and decrypts the extracted encrypted digital data.

23. The device according to claim 22, further including a second decrypting means for decrypting encrypted information indicative of the position of the encrypted digital data,
the input means acquiring the encrypted positional information along with the digital data; and
the decrypting means extracting the encrypted digital data on the basis of the information indicative of the position of the encrypted digital data decrypted by the second decrypting means and decrypting the encrypted digital data.
